# EUROPÄISCHE PATENTSCHRIFT

(11) **EP 3 440 088 B1**
(45) Veröffentlichungstag und Bekanntmachung des Hinweises auf die Patenterteilung: **18.12.2019**
(21) Anmeldenummer: 17710711.7
(22) Anmeldetag: 10.03.2017
(51) Int. Cl.: C07F 17/00, C07F 7/08

(54) **EDELMETALLFREIE HYDROSILYLIERBARE MISCHUNG**
NOBLE METAL-FREE HYDROSILYLATABLE MIXTURE
MÉLANGE HYDROSILYLABLE EXEMPT DE MÉTAUX NOBLES

(30) Priorität: 04.04.2016 DE 102016205526
(43) Veröffentlichungstag der Anmeldung: 13.02.2019
(73) Patentinhaber: Wacker Chemie AG, 81737 München (DE)
(72) Erfinder: FRITZ-LANGHALS, Elke, 85521 Ottobrunn (DE); JUTZI, Peter, 33613 Bielefeld (DE); WEIDNER, Richard, 84489 Burghausen (DE)
(74) Vertreter: Mai, Marit
(86) Internationale Anmeldenummer: PCT/EP2017/055622
(87) Internationale Veröffentlichungsnummer: WO 2017/174290

(56) Entgegenhaltungen:
- Kinga Leszczy ET AL: "Silicon(II) Compounds The Pentamethylcyclopentadienylsilicon(II) Cation as a Catalyst for the Specific Degradation of Oligo(ethyleneglycol) Diethers**", Angew. Chem. Int. Ed., 1. Januar 2011 (2011-01-01), Seiten 6843-6846, XP055360214, Gefunden im Internet: URL:http://onlinelibrary.wiley.com/store/1 0.1002/anie.201101139/asset/6843_ftp.pdf?v =1&t=j0vy6y0z&s=77ebeeef0d3e0a92ed27ef48df 27bf8c32f87d45 [gefunden am 2017-03-30]
- JOSEPH B. LAMBERT ET AL: "[beta]-Silyl and [beta]-Germyl Carbocations Stable at Room Temperature", THE JOURNAL OF ORGANIC CHEMISTRY, Bd. 64, Nr. 8, 1. April 1999 (1999-04-01), Seiten 2729-2736, XP055360215, ISSN: 0022-3263, DOI: 10.1021/jo982146a
- PETER JUTZI: "The Pentamethylcyclopentadienylsilicon(II) Cation: Synthesis, Characterization, and Reactivity", CHEMISTRY - A EUROPEAN JOURNAL, Bd. 20, Nr. 30, 1. Juli 2014 (2014-07-01), Seiten 9192-9207, XP055333466, ISSN: 0947-6539, DOI: 10.1002/chem.201402163
- "Hydrosilylierung", Römpp, Thieme , Retrieved from the Internet: URL:https://thieme.de./roempp4.0/do/data/R D-08-02274 [retrieved on 2019-02-14]

## Beschreibung

Die Erfindung betrifft eine hydrosilylierbare Mischung, die eine Verbindung mit kationischer Si(II)-Gruppierung als Katalysator enthält.

Die Addition von Hydrosiliciumverbindungen an Alkene und Alkine unter Ausbildung einer Si-C-Verknüpfung spielt in der Technik eine wichtige Rolle. Diese als Hydrosilylierung bezeichnete Reaktion wird beispielsweise zur Vernetzung von Siloxanen oder zur Einführung von funktionellen Gruppen in Silane oder Siloxane eingesetzt. Die Hydrosilylierung wird in der Regel durch Edelmetall-Komplexe katalysiert. Sehr häufig werden Platin-, Rhodium- oder Iridium-Komplexe eingesetzt, die das Verfahren erheblich verteuern, insbesondere dann, wenn das Edelmetall nicht zurückgewonnen werden kann und im Produkt verbleibt.

Die Edelmetalle stehen als Rohstoffe nur begrenzt zur Verfügung und sind nicht vorhersehbaren und nicht beeinflussbaren Preisschwankungen ausgesetzt. Ein Hydrosilylierungskatalysator, der frei von Edelmetall ist, ist daher von großem technischem Interesse.

Die Aufgabe der vorliegenden Erfindung besteht daher darin, einen edelmetallfreien Hydrosilylierungskatalysator bereitzustellen.

Vereinzelt sind metallfreie Katalysatoren in der Literatur beschrieben. Als kationischer Katalysator ist in Can. J. Chem. 2003, 81, 1223 das Tritylium-Kation bekannt, dessen katalytische Wirksamkeit jedoch nur an einem Sonderfall, einer intramolekularen Hydrosilylierung gezeigt werden konnte.

Weiterer relevanter Stand der Technik sind folgende Dokumente:
Kinga Leszczy ET AL: "Silicon(II) Compounds The Pentamethylcyclopentadienylsilicon(II) Cation as a Catalyst for the Specific Degradation of Oligo(ethyleneglycol) Diethers",Angew. Chem. Int. Ed., 2011, Seiten 6843-6846
JOSEPH B. LAMBERT ET AL: "[beta]-Silyl and [beta]-Germyl Carbocations Stable at Room Temperature",THE JOURNAL OF ORGANIC CHEMISTRY, Bd. 64, Nr. 8, 1999, Seiten 2729-2736
PETER JUTZI: "The Pentamethylcyclopentadienylsilicon(II) Cation: Synthesis, Characterization, and Reactivity",CHEMISTRY - A EUROPEAN JOURNAL, Bd. 20, Nr. 30, 2014, Seiten 9192-9207

Gegenstand der Erfindung ist eine hydrosilylierbare Mischung **M** wie in Anspruch 1 definiert enthaltend
**(A)** Verbindung mit mindestens einem direkt an Si-gebundenen Wasserstoffatom,
**(B)** Verbindung, die mindestens eine Kohlenstoff-Kohlenstoff-Mehrfachbindungen enthält und
**(C)** Verbindung, die mindestens eine kationische Si(II)-Gruppierung enthält.

Es wurde nun überraschend gefunden, dass Silicium(II)-Verbindungen, die in kationischer Form vorliegen - sogenannte Silyliumyliden Kationen - Hydrosilylierungsreaktionen katalysieren. Deshalb ist die Mischung **M** ohne Edelmetallkatalysator hydrosilylierbar. Die kationische Si(II)-Gruppierung ist hochwirksam als Hydrosilylierungskatalysator.

Die Verbindung **A** mit mindestens einem direkt an Si-gebundenen Wasserstoffatom hat bevorzugt die allgemeine Formel I

**R¹R²R³Si-H** **(I)**

wobei die Reste **R¹**, **R²** und **R³** unabhängig voneinander die Bedeutung Wasserstoff, Halogen, Silyloxyrest, Kohlenwasserstoffrest oder Kohlenwasserstoffoxyrest haben, wobei jeweils einzelne Kohlenstoffatome durch Sauerstoffatome, Siliciumatome, Stickstoffatome, Halogen, Schwefel oder Phosphoratome ersetzt sein können.

Besonders bevorzugt bedeuten die Reste **R¹**, **R²** und **R³** unabhängig voneinander Wasserstoff, Halogen, unverzweigter, verzweigter, linearer, acyclischer oder cyclischer, gesättigter oder einfach oder mehrfach ungesättigter C1-C20-Kohlenwasserstoffrest oder unverzweigter, verzweigter, linearer oder cyclischer, gesättigter oder einfach oder mehrfach ungesättigter C1-C20-Kohlenwasserstoffoxyrest, wobei einzelne Kohlenstoffatome durch Sauerstoff, Halogen, Stickstoff oder Schwefel ersetzt sein können, oder Silyloxyrest der allgemeinen Formel II

**(SiO_{4/2})ₐ(R^{x}SiO_{3/2})**_{b}**(R^{x}₂SiO_{2/2})_{c}(R^{x}₃SiO_{1/2})_{d}-** **(II)**

in der
**R^{x}** unabhängig voneinander Wasserstoff, Halogen, unverzweigter, verzweigter, linearer, acyclischer oder cyclischer, gesättigter oder einfach oder mehrfach ungesättigter C1-C20-Kohlenwasserstoffrest oder unverzweigter, verzweigter, linearer oder cyclischer, gesättigter oder einfach oder mehrfach ungesättigter C1-C20-Kohlenwasserstoffoxyrest bedeuten, wobei einzelne Kohlenstoffatome durch Sauerstoff, Halogen, Stickstoff oder Schwefel ersetzt sein können,
**a, b, c** und **d** unabhängig voneinander ganzzahlige Werte von 0 bis 100000 bedeuten, wobei die Summe aus **a, b, c** und **d** zusammen mindestens den Wert 1 annimmt.

Ganz besonders bevorzugt bedeuten die Reste **R¹**, **R²** und **R³** unabhängig voneinander Wasserstoff, Chlor, C1-C3-Alkyl- oder Alkylenrest, Phenylrest, C1-C4 Alkoxyrest oder Silyloxyrest der allgemeinen Formel II, in der **R^{x}** unabhängig voneinander Wasserstoff, Chlor, C1-C6 Alkyl oder Alkylen, Phenyl oder C1-C6 Alkoxy bedeuten.

Besonders bevorzugte Reste **R¹**, **R²** und **R³** sind die Reste Methyl, Methoxy, Ethyl, Ethoxy, Propyl, Propoxy, Phenyl, Chlor oder Silyloxyrest, insbesondere der allgemeinen Formel II. Besonders bevorzugte Reste **R^{x}** sind die Reste Methyl, Methoxy, Ethyl, Ethoxy, Propyl, Propoxy, Phenyl und Chlor.

Beispiele für Verbindungen **A** der allgemeinen Formel (I) sind die folgenden Silane(Ph = Phenyl, Me = Methyl, Et = Ethyl): Me₃SiH, Et₃SiH, Me₂PhSiH, MePh₂SiH, Me₂ClSiH, Et₂ClSiH, MeCl₂SiH, Cl₃SiH, Me₂(MeO)SiH, Me(MeO)₂SiH, (MeO)₃SiH, Me₂(EtO)SiH, Me(EtO)₂SiH, (EtO)₃SiH, (Me)₂HSi-O-SiH(Me)₂
und die folgenden Siloxane:
HSiMe₂-O-SiMe₂H, Me₃Si-O-SiHMe-O-SiMe₃,
H-SiMe₂-(O-SiMe₂)ₘ-O-SiMe₂-H mit m = 1 bis 20000, Me₃Si-O-(SiMe₂-O)ₙ(SiHMe-O)ₒ-SiMe₃ mit n = 1 bis 20000 und o = 1 bis 20000.

Die Verbindung **A** kann auch eine Mischung verschiedener Verbindungen der allgemeinen Formeln **(I)** sein, bei denen gegebenenfalls die Reste **R¹**, **R²** und **R³** verschiedene Reste der allgemeinen Formel **(II)** sein können.

Die Verbindungen **B** mit mindestens einer Kohlenstoff-Kohlenstoff-Mehrfachbindung werden vorzugsweise ausgewählt aus Verbindungen mit mindestens einer Kohlenstoff-Kohlenstoff-Doppelbindung der allgemeinen Formel **IIIa**

R⁴R⁵C=CR⁶R⁷ **(IIIa)**,

und aus Verbindungen mit mindestens einer Kohlenstoff-Kohlenstoff-Dreifachbindung der allgemeinen Formel **IIIb**

R⁸C≡CR⁹ **(IIIb),**

wobei
**R⁴, R⁵, R⁶, R⁷, R⁸** und **R⁹** unabhängig voneinander linearer, verzweigter, acyclischer oder cyclischer, gesättigter oder einfach oder mehrfach ungesättigter C1-C20-Kohlenstoffrest bedeuten, wobei einzelne Kohlenstoffatome durch Silicium, Sauerstoff, Halogen, Stickstoff, Schwefel oder Phosphor ersetzt sein können.

Es können auch Gemische der Verbindungen der allgemeinen Formel **IIIa** und **IIIb** vorliegen.

Besonders bevorzugt bedeuten die Reste **R⁴**, **R⁵, R⁶, R⁷, R⁸** und **R⁹** unabhängig voneinander Wasserstoff, linearer, verzweigter, acyclischer oder cyclischer, gesättigter oder einfach oder mehrfach ungesättigter C1-C6-Kohlenstoffrest, welcher durch eine oder mehrere Heteroatomgruppierungen, insbesondere die Gruppierungen Halogen, insbesondere Chlor, Amino, Nitril, Alkoxy, COO**R^{z}**, O-CO-**R^{z}**, NH-CO-**R^{z}**, O-CO-O**R^{z}** substituiert sein kann, wobei **R^{z}** unabhängig voneinander Wasserstoff, Chlor, C1-C6 Alkyl oder Alkylen, Phenyl oder C1-C6 Alkoxy bedeutet.

Bevorzugt bedeutet einer oder mehrere Reste **R⁴-R⁹** Wasserstoff.

Ganz besonders bevorzugt handelt es sich bei der Verbindung der allgemeinen Formel **IIIa** um ein Silan oder ein Siloxan der allgemeinen Formel **R¹⁰R¹¹R¹²**Si-CH=CH₂, worin die Reste **R¹⁰**, **R¹¹** und **R¹²** die oben für **R¹**, **R²** und **R³** angegebenen Bedeutungen und bevorzugten Bedeutungen haben.

Besonders bevorzugte Reste R¹⁰, R¹¹ und R¹² sind die Reste Methyl, Methoxy, Ethyl, Ethoxy, Propyl, Propoxy, Phenyl, Chlor oder Silyloxyrest, insbesondere der allgemeinen Formel II.

Beispiele für Verbindungen **B** sind Ethylen, Propylen, 1-Butylen, 2-Butylen, Cyclohexen,
Styrol, α-Methylstyrol, 1,1-Diphenylethylen, cis-Stilben, trans-Stilben,
Allylchlorid, Allylamin, Acrylnitril, Allylglycidylether, Vinylacetat,
Vinyl-Si(CH₃)₂OMe, Vinyl-SiCH₃(OMe)₂, Vinyl-Si(OMe)₃
Vinyl-Si(CH3)2-[O-Si(CH3)2]n-Vinyl mit n = 0 bis 10000
Acetylen, Propin, 1- Butin, 2-Butin und Phenylacetylen.

Die Verbindungen **(A)** und **(B)** können auch durch eine oder mehrere chemische Bindungen miteinander verbunden sein, d.h. sie können beide in einem Molekül vorliegen.

Die Verbindung **C** enthält eine oder mehrere kationische Si(II) Gruppierungen, wobei die Verbindung **C** eine kationische Si(II)-Verbindung der allgemeinen Formel IV

**([Si(II)Cp]⁺)**ₐ**X**^{**a**-} **(IV)**

worin
**Cp** einen π-gebundenen Cyclopentadienylrest der allgemeinen Formel **V,** welcher mit den Resten **R^{y}** substituiert ist, 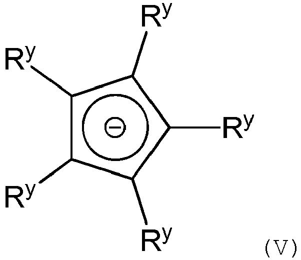 ist.

Unter Cyclopentadienylrest Cp ist das Cyclopentadienyl-Anion zu verstehen, welches aus einem einfach negativ geladenen, aromatischen Fünfringsystem C₅R^{y}₅⁻ besteht.

**R^{y}** sind beliebige einwertige Reste oder mehrwertige Reste, die zur Bildung anellierter Ringe auch miteinander verbunden sein können.

Die Reste **R^{y}** bedeuten unabhängig voneinander bevorzugt Wasserstoff, lineare oder verzweigte, acyclische oder cyclische, gesättigte oder ein- oder mehrfach ungesättigte C1-C20 Alkyl oder Aryl, besonders bevorzugt C1-C3 Alkyl, ganz besonders bevorzugt Methylreste.

Beispiele für Reste **R^{y}** sind Alkylreste, wie der Methyl-, Ethyl-, n-Propyl-, iso-Propyl-, n-Butyl-, sec-Butyl-, iso-Butyl-, tert.-Butyl-, n-Pentyl-, sec-Pentyl, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Arylreste, wie der Phenyl-, Naphthyl-, Anthryl- und Phenanthrylrest; Alkarylreste, wie der o-, m- und p-Tolyl-, Xylyl-, Mesitylenyl- und o-, m- und p-Ethylphenylrest; und Alkarylreste, wie der Benzylrest, der α- und der β-Phenylethylrest.

**X^{a-}** bedeutet ein beliebiges **a** wertiges Anion, welches unter den Reaktionsbedingungen einer Hydrosilylierung mit dem kationischen Silicium(II)zentrum nicht reagiert. Es kann sowohl anorganisch als auch organisch sein. Vorzugsweise hat **a** die Werte 1, 2, oder 3, insbesondere 1.

**X⁻** bedeutet bevorzugt Halogen oder ein komplexes Anion wie BF₄⁻, ClO₄⁻, AlZ₄⁻, MF₆⁻ mit Z = Halogen und M = P, As oder Sb, oder Tetraarylboratanion, wobei der Arylrest bevorzugt Phenyl oder fluoriertes oder mit Perfluoralkylresten substituiertes Phenyl bedeutet, einwertiges polyedrisches Anion, wie z.B. Carboratanion, oder Alkoxy- und Aryloxymetallation.

Beispiele für Anionen **X⁻** sind Tetrachlorometallate [MCl₄]⁻ mit M = Al, Ga, Tetrafluoroborate [BF₄]⁻, Hexafluorometallate [MF₆]⁻ mit M = As, Sb, Ir, Pt, Perfluoroantimonate [Sb₂F₁₁]⁻, [Sb₃F₁₆]⁻ und [Sb₄F₂₁]⁻, Triflat (= Trifluoromethanesulfonat)[OSO₂CF₃]⁻, Tetrakis(trifluormethyl)borat[B(CF₃)₄]⁻, Tetrakis(pentafluorophenyl)metallate[M(C₆F₅)₄]⁻ mit M = B, Al, Ga, Tetrakis(pentachlorophenyl)borat[B(C₆Cl₅)₄]⁻, Tetrakis[(2,4,6-trifluoromethyl(phenyl)]borat{B[C₆H₂(CF₃)₃]}⁻, [Bis[tris(pentafluorophenyl)]hydroxid{HO[B(C₆F₅)₃]₂}⁻, *Closo-*Carborate [CHB₁₁H₅Cl₆]⁻, [CHB₁₁H₅Br₆]⁻, [CHB₁₁(CH₃)₅Br_{6]}⁻, [CHB₁₁F₁₁]⁻ , [C(Et)B₁₁F₁₁]⁻, [CB₁₁(CF₃)₁₂]⁻ und B₁₂Cl₁₁N(CH₃)₃]⁻, Tetra (perfluoroalkoxy) aluminate [Al(OR^{PF})₄]⁻, Tris(perfluoroalkoxy)fluoroaluminate [FAl(OR^{PF})₃]⁻, Hexakis(oxypentafluorotellur)antimonat [Sb(OTeF₅)₆]⁻.

Eine Übersicht über besonders bevorzugte komplexe Anionen **X⁻** findet sich z.B. in Krossing et. al., Angew. Chem. 2004, 116, 2116.

Die Herstellung der kationischen Si(II)-Verbindung der allgemeinen Formel (IV) kann durch Zugabe einer Säure H⁺X⁻ zu der Verbindung Si(II)Cp₂, durch die einer der anionischen Cp-Reste in protonierter Form abgespalten wird, erfolgen:

Si(II)Cp₂ + H⁺X⁻ -> Si(II)⁺Cp X⁻ + CpH

Das Anion **X⁻** der Säure HX bildet dann das Gegenion der kationischen Silicium(II)-Verbindung.

Eine Herstellungsmethode für die kationische Si(II) Verbindung der allgemeinen Formel (II) ist in Science 2004, 305, S. 849-851, beschrieben:

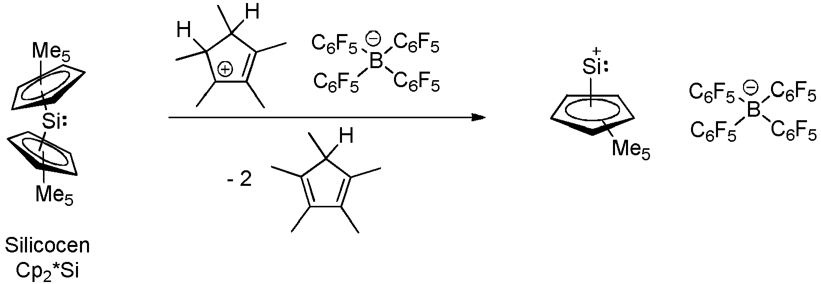

Die Bildung der kationischen Si(II)-Verbindung der allgemeinen Formel (IV) erfolgt dort mit Hilfe der Säure (Cp*H₂)⁺ B(C₆F₅)₄⁻ (Cp* = Pentamethylcyclopentadienyl). In diesem Fall wird die Verbindung der Formel (IV) mit dem Gegenion X⁻ = B(C₆F₅)₄⁻ erhalten, welches sehr gut kristallisierbar ist und daher besonders leicht isoliert werden kann. Die Verbindung der allgemeinen Formel (IV) kann jedoch auch durch Zugabe anderer Bronstedt-Säuren erzeugt werden, wobei Säuren bevorzugt sind, deren Anionen den oben angegebenen Anforderungen der schwachen Koordination entsprechen.

Ebenfalls Gegenstand der Erfindung ist ein Verfahren zur Hydrosilylierung der Mischung wie in Ansprüchen 1-5 definiert enthaltend
**(A)** Verbindung mit mindestens einem direkt an Si-gebundenen Wasserstoffatom,
**(B)** Verbindung, die mindestens eine Kohlenstoff-Kohlenstoff-Mehrfachbindungen enthält und
**(C)** Verbindung, die mindestens eine kationische Si(II)-Gruppierung enthält.

Bei dem beanspruchten Verfahren wird Verbindung **A** mit Verbindung **B** in Gegenwart von Verbindung **C** als Hydrosilylierungskatalysator umgesetzt.

Das molare Verhältnis der Verbindungen **A** und **B** beträgt bezogen auf die vorhandenen Si-H bzw. die ungesättigten Kohlenstoffgruppierungen bevorzugt mindestens 1:100 und höchstens 100:1, besonders bevorzugt mindestens 1:10 und höchstens 10:1, ganz besonders bevorzugt mindestens 1:2 und höchstens 2:1.

Das molare Verhältnis zwischen der Verbindung **C** und den in der Verbindung **A** vorhandenen Si-H-Gruppierungen beträgt bevorzugt mindestens 1:10⁷ und höchstens 1:1, besonders bevorzugt mindestens 1:10⁶ und höchstens 1:10, ganz besonders bevorzugt mindestens 1:10⁵ und höchstens 1:50.

Die Verbindungen **A, B** und **C** können in beliebiger Reihenfolge vermischt werden, wobei das Vermischen in einer der Fachkraft bekannten Weise erfolgt. Ebenso ist es möglich, die Verbindungen **A** und **B** oder **A** und **C** oder **B** und **C** zu mischen und dann die noch fehlende Verbindung hinzuzufügen. In einer weiteren Ausführungsform wird die Verbindung **C** in der Verbindung **A** oder **B** oder im Gemisch der beiden Verbindungen beispielsweise durch die oben beschriebene Protonierungsreaktion erzeugt.

Die Umsetzung der Verbindungen **A** und **B** in Gegenwart der Verbindung **C** kann mit oder ohne Zusatz einer oder mehrerer Lösemittel durchgeführt werden. Der Anteil des Lösemittels oder des Lösemittelgemisches beträgt bezogen auf die Summe der Verbindungen **A** und **B** bevorzugt mindestens 0,1 Gew.% und höchstens die 1000-fache Gewichtsmenge, besonders bevorzugt mindestens 10 Gew. % und höchstens die 100-fache Gewichtsmenge, ganz besonders bevorzugt mindestens 30 Gew. % und höchstens die 10-fache Gewichtsmenge.

Als Lösemittel können bevorzugt aprotische Lösemittel, beispielsweise Kohlenwasserstoffe wie Pentan, Hexan, Heptan, Cyclohexan oder Toluol, Chlorkohlenwasserstoffe wie Dichlormethan, Chloroform, Chlorbenzol oder 1,2-Dichlorethan, Ether wie Diethylether, Methyl-tert.-butylether, Anisol, Tetrahydrofuran oder Dioxan, oder Nitrile wie z.B. Acetonitril oder Propionitril, eingesetzt werden.

Die Mischung **M** kann beliebige weitere Verbindungen wie z.B. Prozesshilfsstoffe, z.B. Emulgatoren, Füllstoffe, z.B. hochdisperse Kieselsäure oder Quarz, Stabilisatoren, z.B. Radikalinhibitoren, Pigmente, z.B. Farbstoffe oder Weißpigmente, z.B. Kreide oder Titandioxid enthalten.

Die Umsetzung kann unter Umgebungsdruck oder unter vermindertem oder unter erhöhtem Druck durchgeführt werden.

Der Druck beträgt bevorzugt mindestens 0,01 bar und höchstens 100 bar, besonders bevorzugt mindestens 0,1 bar und höchstens 10 bar, ganz besonders bevorzugt wird die Umsetzung bei Umgebungsdruck durchgeführt. Sind jedoch an der Umsetzung Verbindungen beteiligt, die bei der Reaktionstemperatur gasförmig vorliegen, erfolgt bevorzugt eine Umsetzung unter erhöhtem Druck, besonders bevorzugt bei dem Dampfdruck des Gesamtsystems.

Die Umsetzung von **A** und **B** in Gegenwart von **C** erfolgt bevorzugt bei Temperaturen zwischen mindestens - 100°C und höchstens + 250°C, besonders bevorzugt zwischen mindestens - 20°C und höchstens 150°C, ganz besonders bevorzugt zwischen mindestens 0°C und höchstens 100°C.

Alle vorstehenden Symbole der vorstehenden Formeln weisen ihre Bedeutungen jeweils unabhängig voneinander auf. In allen Formeln ist das Siliciumatom vierwertig.

Es sind, falls jeweils nicht anders angegeben, alle Mengen- und Prozentangaben auf das Gewicht bezogen, und alle Temperaturen 20°C.

### Beispiel 1: Hydrosilylierung von α-Methylstyrol mit Triethylsilan unter Zusatz von (π-Me₅C₅)Si⁺B(C₆F₅)₄⁻

Alle Arbeitsschritte werden unter Ar ausgeführt. 120 mg (1,02 mmol) α-Methylstyrol und 116 mg (1,01 mmol) Triethylsilan wurden in je ein Schraubdeckelglas eingewogen und mit jeweils 0,5ml CD₂Cl₂ versetzt. Die zwei Lösungen wurden miteinander vermischt. Dann wurde bei 20°C eine Lösung von 25,4 mg (0,0302mmol, 3,0 Mol %) (π-Me₅C₅)Si⁺B(C₆F₅)₄⁻ in 1 ml CD₂Cl₂ zu dem Gemisch aus α-Methylstyrol und Triethylsilan gegeben.

Nach einer Stunde waren ca. 30 % Triethylsilan umgesetzt, über Nacht war die Umsetzung vollständig (NMR-spektroskopische Verfolgung der Umsetzung). Es bildete sich das Produkt Phenyl-CH(CH₃)-CH₂-Si(Ethyl)₃.

Das ¹H-NMR-Signal des Katalysators (π-Me₅C₅)Si⁺B(C₆F₅)₄⁻ bei δ = 2,22 ppm wurde in unveränderter Größe nachgewiesen, es erfolgte keine messbare Abnahme.

### Beispiel 2: Hydrosilylierung von α-Methylstyrol mit Triethylsilan unter Zusatz von (π-Me₅C₅)Si⁺B(C₆F₅)₄⁻

Alle Arbeitsschritte werden unter Ar ausgeführt. 236 mg (2,00 mmol) α-Methylstyrol und 233 mg (2,00 mmol) Triethylsilan wurden in je ein Schraubdeckelglas eingewogen und mit jeweils 0,5ml CD₂Cl₂ versetzt. Die zwei Lösungen wurden miteinander vermischt. Dann wurde bei 20°C eine Lösung von 6,4 mg (0,0075 mmol, 0,38 Mol %) (π-Me₅C₅)Si⁺B(C₆F₅)₄⁻ in 1 ml CD₂Cl₂ zu dem Gemisch aus α-Methylstyrol und Triethylsilan gegeben.

Nach einer Stunde waren ca. 35 % Triethylsilan umgesetzt, über Nacht war die Umsetzung vollständig (NMR-spektroskopische Verfolgung der Umsetzung). Es bildete sich das Produkt Phenyl-CH(CH₃)-CH₂-Si(Ethyl)₃. Das ¹H-NMR-Signal des Katalysators (π-Me₅C₅)Si⁺B(C₆F₅)₄⁻ bei δ = 2,22 ppm wurde in unveränderter Größe nachgewiesen, es erfolgte keine messbare Abnahme.

### Beispiel 3: Hydrosilylierung von α-Methylstyrol mit Dimethylphenylsilan unter Zusatz von (π-Me₅C₅)Si⁺B(C₆F₅)₄⁻

Alle Arbeitsschritte werden unter Ar ausgeführt. 236 mg (2,00 mmol) α-Methylstyrol und 272 mg (2,00 mmol) Dimethylphenylsilan wurden in je ein Schraubdeckelglas eingewogen und mit jeweils 0,5ml CD₂Cl₂ versetzt. Die zwei Lösungen wurden miteinander vermischt. Dann wurde bei 20°C eine Lösung von 25,4 mg (0,0075 mmol, 0,38 Mol %) (π-Me₅C₅)Si⁺B(C₆F₅)₄⁻ in 1 ml CD₂Cl₂ zu dem Gemisch aus α-Methylstyrol und Dimethylphenylsilan gegeben. Nach einer Stunde waren > 90 % Dimethylphenylsilan umgesetzt, über Nacht war die Umsetzung vollständig (NMR-spektroskopische Verfolgung der Umsetzung). Es bildete sich das Produkt Phenyl-CH(CH₃)-CH₂-Si(CH₃)₂Phenyl. Das ¹H-NMR-Signal des Katalysators (π-Me₅C₅)Si⁺B(C₆F₅)₄⁻ bei δ = 2,20 ppm wurde in unveränderter Größe nachgewiesen, es erfolgte keine messbare Abnahme.

### Beispiel 4: Hydrosilylierung von α-Methylstyrol mit Pentamethyldisiloxan unter Zusatz von (π-Me₅C₅)Si⁺B(C₆F₅)₄⁻

Alle Arbeitsschritte werden unter Ar ausgeführt. 119 mg (1,01 mmol) α-Methylstyrol und 148 mg (1,00 mmol) Pentamethyldisiloxan wurden in je ein Schraubdeckelglas eingewogen und mit jeweils 0,5ml CD₂Cl₂ versetzt. Die zwei Lösungen wurden miteinander vermischt. Dann wurde bei 20°C eine Lösung von 1,8 mg (0,0021 mmol, 0,21 Mol %) (π-Me₅C₅)Si⁺B(C₆F₅)₄⁻ in 1 ml CD₂Cl₂ zu dem Gemisch aus α-Methylstyrol und Pentamethyldisiloxan gegeben.

Nach einer Stunde war die Umsetzung vollständig (¹H-NMR-Spektrum). Es bildete sich das Produkt Phenyl-CH(CH₃)-CH₂-Si(CH₃)₂-O-Si(CH₃)₃. Das ¹H-NMR-Signal des Katalysators (π-Me₅C₅)Si⁺B(C₆F₅)₄⁻ bei δ = 2,20 ppm wurde in unveränderter Größe nachgewiesen, es erfolgte keine messbare Abnahme.

## Patentansprüche

1. Hydrosilylierbare Mischung **M** enthaltend
**(A)** Verbindung mit mindestens einem direkt an Si-gebundenen Wasserstoffatom,
**(B)** Verbindung, die mindestens eine Kohlenstoff-Kohlenstoff-Mehrfachbindung enthält und
**(C)** Verbindung, die mindestens eine kationische Si(II)-Gruppierung enthält,
wobei die Verbindung **C** eine kationische Si(II)-Verbindung der allgemeinen Formel IV
**([Si(II)Cp]⁺)ₐ X^{a-}** **(IV)**
ist, worin
**Cp** ein π-gebundener Cyclopentadienylrest der allgemeinen Formel **V** ist, welcher mit den Resten **R^{y}** substituiert ist, 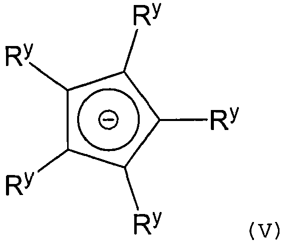
**R^{y}** einwertige Reste oder mehrwertige Reste sind, die zur Bildung anellierter Ringe auch miteinander verbunden sein können und
**X⁻** ein **a** wertiges Anion bedeutet, welches unter den Reaktionsbedingungen einer Hydrosilylierung mit dem kationischen Silicium(II)zentrum nicht reagiert.

2. Hydrosilylierbare Mischung **M** nach Anspruch 1, wobei die Verbindung **A** die allgemeine Formel I
**R¹R²R³Si-H** **(I)**
aufweist,
wobei die Reste **R¹**, **R²** und **R³** unabhängig voneinander die Bedeutung Wasserstoff, Halogen, Silyloxyrest, Kohlenwasserstoffrest oder Kohlenwasserstoffoxyrest haben, wobei jeweils einzelne Kohlenstoffatome durch Sauerstoffatome, Siliciumatome, Stickstoffatome, Halogen, Schwefel oder Phosphoratome ersetzt sein können.

3. Hydrosilylierbare Mischung **M** nach Anspruch 1 oder 2, wobei die Verbindung **B** ausgewählt wird aus Verbindungen der allgemeinen Formel **IIIa**
R⁴R⁵C=CR⁶R⁷ **(IIIa)**,
und aus Verbindungen der allgemeinen Formel **IIIb**
R⁸C≡CR⁹ **(IIIb),**
wobei
**R⁴**, **R⁵, R⁶, R⁷, R⁸** und **R⁹** unabhängig voneinander linearer, verzweigter, acyclischer oder cyclischer, gesättigter oder einfach oder mehrfach ungesättigter C1-C20-Kohlenwasserstoffrest bedeuten, wobei einzelne Kohlenstoffatome durch Silicium, Sauerstoff, Halogen, Stickstoff, Schwefel oder Phosphor ersetzt sein können.

4. Hydrosilylierbare Mischung **M** nach einem der Ansprüche 1-3, wobei das molare Verhältnis zwischen der Verbindung **C** und den in der Verbindung **A** vorhandenen Si-H-Gruppierungen 1:10⁷ bis 1:50 beträgt.

5. Verfahren zur Hydrosilylierung der Mischung **M** nach einem der Ansprüche 1-4, wobei Verbindung A mit Verbindung B in Gegenwart von Verbindung C als Hydrosilylierungskatalysator umgesetzt wird.

## Claims

1. Hydrosilylable mixture **M** comprising
**(A)** a compound having at least one hydrogen atom bonded directly to Si,
**(B)** a compound comprising at least one carbon-carbon multiple bond and
**(C)** a compound comprising at least one cationic Si(II) moiety,
wherein the compound **C** is a cationic Si(II) compound of general formula IV
**([Si(II)Cp]⁺)ₐ X^{a-}** **(IV)**
in which
**Cp** is π-bonded cyclopentadienyl radical of general formula **V**, which is substituted by radicals **R^{y}**, 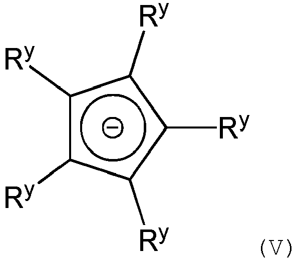
**R^{y}** are monovalent radicals or polyvalent radicals, which can also bond to one another to form fused rings and
**X⁻** signifies an **a** valent anion, which does not react with the cationic silicon(II) centre under the reaction conditions of hydrosilylation.

2. Hydrosilylable mixture **M** according to Claim 1 wherein compound **A** has general formula I
**R¹R²R³Si-H** **(I)**
wherein the radicals **R¹**, **R²** and **R³** each independently have the definition hydrogen, halogen, silyloxy radical, hydrocarbon radical or hydrocarbonoxy radical, wherein individual carbon atoms in each case may be replaced by oxygen atoms, silicon atoms, nitrogen atoms, halogen, sulfur or phosphorus atoms.

3. Hydrosilylable mixture **M** according to Claim 1 or 2, wherein compound **B** is selected from compounds of general formula **IIIa**
R⁴R⁵C=CR⁶R⁷ **(IIIa)**,
and from compounds of general formula **IIIb**
R⁸C≡CR⁹ **(IIIb),**
wherein
**R⁴**, **R⁵, R⁶, R⁷, R⁸** and **R⁹** are each independently linear, branched, acyclic or cyclic, saturated or mono- or polyunsaturated C1-C20 hydrocarbon radicals, wherein individual carbon atoms may be replaced by silicon, oxygen, halogen, nitrogen, sulfur or phosphorus.

4. Hydrosilylable mixture **M** according to one of Claims 1 to 3, wherein the molar ratio between compound **C** and the Si-H moieties present in compound **A** is from 1:10⁷ to 1:50.

5. Method for hydrosilylating mixture **M** according to one of Claims 1 to 4, wherein compound A is reacted with compound B in the presence of compound C as hydrosilylation catalyst.

## Revendications

1. Mélange hydrosilylable **M** contenant :
(**A**) un composé qui contient au moins un atome d'hydrogène directement relié à Si,
(**B**) un composé qui contient au moins une liaison multiple carbone-carbone, et
(**C**) un composé qui contient au moins un groupe Si (II) cationique,
le composé **C** étant un composé de Si (II) cationique de la formule générale IV :
**([Si(II)Cp]⁺)ₐ X^{a-}** **(IV)**
dans laquelle
**Cp** est un radical cyclopentadiényle à liaison π de la formule générale **V,** qui est substitué avec les radicaux **R^{y},** 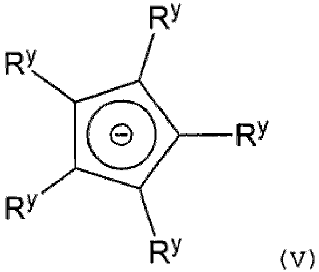
les **R^{y}** sont des radicaux monovalents ou des radicaux polyvalents, qui peuvent également être reliés les uns avec les autres pour la formation de cycles annelés, et
**X⁻** signifie un anion **a**-valent, qui ne réagit pas dans les conditions de réaction d'une hydrosilylation avec le centre silicium (II) cationique.

2. Mélange hydrosilylable **M** selon la revendication 1, dans lequel le composé **A** présente la formule générale I :
**R¹R²R³Si-H** **(I)**
dans laquelle les radicaux **R¹**, **R²** et **R³** signifient indépendamment les uns des autres hydrogène, halogène, un radical silyloxy, un radical hydrocarboné ou un radical oxyhydrocarboné, des atomes de carbone individuels pouvant à chaque fois être remplacés par des atomes d'oxygène, des atomes de silicium, des atomes d'azote, des atomes d'halogène, de soufre ou de phosphore.

3. Mélange hydrosilylable **M** selon la revendication 1 ou 2, dans lequel le composé **B** est choisi parmi les composés de la formule générale **IIIa** :
R⁴R⁵C=CR⁶R⁷ **(IIIa)**
et parmi les composés de la formule générale **IIIb** :
R⁸C≡CR⁹ **(IIIb)**
dans lesquelles
**R⁴**, **R⁵, R⁶, R⁷, R⁸** et **R⁹** signifient indépendamment les uns des autres un radical hydrocarboné en C1-C20 linéaire, ramifié, acyclique ou cyclique, saturé ou mono- ou polyinsaturé, dans lequel des atomes de carbone individuels peuvent être remplacés par du silicium, de l'oxygène, un halogène, de l'azote, du soufre ou du phosphore.

4. Mélange hydrosilylable **M** selon l'une quelconque des revendications 1 à 3, dans lequel le rapport molaire entre le composé **C** et les groupes Si-H présents dans le composé **A** est de 1:10⁷ à 1:50.

5. Procédé d'hydrosilylation du mélange **M** selon l'une quelconque des revendications 1 à 4, dans lequel le composé A est mis en réaction avec le composé B en présence du composé C en tant que catalyseur d'hydrosilylation.
